(19) Europäisches Patentamt

European Patent Office

Office européen des brevets

(11) EP 0 786 321 A1

## (12) EUROPEAN PATENT APPLICATION

(43) Date of publication:
30.07.1997 Bulletin 1997/31

(51) Int. Cl.<sup>6</sup>: B29C 44/46

(21) Application number: 96100904.0

(22) Date of filing: 23.01.1996

(84) Designated Contracting States:
DE FR GB IT

(71) Applicant: FOAMING TECHNOLOGIES CARDIO B.V.
NL-3011 TA Rotterdam (NL)

(72) Inventor: Fiorentini, Carlo
I-21047 Saronno (Varese) (IT)

(74) Representative: Coloberti, Luigi
Via E. de Amicis No. 25
20123 Milano (IT)

(54) **Process and plant for the continuous foaming of laminated panels**

(57) A process and an apparatus for the continuous production of laminated panels. Polyurethane components, catalysts and additives, comprising a low-boiling blowing agent, are mixed under pressure to keep the blowing agent in a liquid state; the resulting mixture is frothed by gradually releasing the blowing agent under pressure controlled conditions, through a lay-down device (19) having an elongated pressure equalization chamber (26) provided with a pressure-drop slot (29) which lead into a frothing cavity (30). The slot (29) comprises facing surfaces which extend in the flow direction to maintain a back pressure in the equalization chamber (26) to keep the blowing agent in a liquid state avoiding turbulent evaporation during the frothing. The frothing foam is thereafter delivered to form a layer having a substantial height, being continuously supplied between peripheral sheet materials (14, 16, 21; 24, 25) which are made to advance and between which the frothed polyurethane mixture complete its expansion performing a foamed reinforcing core (20).

FIG. 1

## Description

Field of the invention

The present invention relates to the production of laminated or layered panels, comprising external layers or sheet material and an intermediate layer of rigid polyurethane foamed core; more particularly the invention is concerned with a process and an apparatus for the continuous production of laminated panels having a rigid polyurethane foamed core, which are normally used in numerous application fields, for example in order to form heat insulations, in the building industry as internal partition walls, or external curtain walls, or for several other applications.

Background of the invention

In the continuous production of laminated panels of rigid polyurethane foam it is common practice to spread or pour a thin layer of a liquid polyurethane mixture onto a continuous underlying substrate, consisting for example of a material in strip form or a continuous succession of trays or shell members movable along a conveyor, then allowing the polyurethane mixture to expand freely upwards owing to the formation of carbon dioxide as a result of the chemical reaction between the polyurethane components, until the resulting foam comes into contact with and adheres to a strip material or to a substrate located above, which moves in a parallel manner at the same speed and a distance from the underlying substrate. The foam is then allowed to cure and adhere to the external layers, after which the continuous layered band is cut into individual panels which can be subsequently completed with other fittings and prepared for the various applications.

More particularly, in the production of laminated panels, of the type comprising external layers or shell made of any suitable material, for example flat or suitably profiled metal sheets, textile and/or pre-treated plastic material, and an intermediate layer of rigid polyurethane foam, which is often required to have a certain mechanical strength and a low heat transmission value, in general use is made of auxiliary blowing agents in combination with water which reacts with the isocyanate in the polyurethane mixture so as to form, by means of the consequent chemical reaction, the carbon dioxide necessary to provide the expansion of the foam.

Although the replacement of these auxiliary blowing agents -nowadays banned by the Montréal protocol- with carbon dioxide in the production of rigid and flexible polyurethane foams has on several occasions been proposed as a theoretically applicable solution, in practice it still remains difficult to realize.

Therefore, in the present-day production of laminated panels comprising rigid polyurethane foams, in which most of the expansion of the polyurethane foam is caused by the carbon dioxide chemically produced by the reaction between water and isocyanate, numerous drawbacks arise, including a certain degree of fragility of the foam on account of the formation of urea, in addition to the high costs which these known systems generally involve on account of the increased use of isocyanate necessary for the production of $CO_2$.

Furthermore, in the normal production of laminated panels, using a liquid polyurethane mixture, the expansion gas generated by the reaction between water and isocyanate generally develops in an already advanced polymerisation phase of the foam, when the polymer matrix has reacted a strong consistency and is developing for the entire height of the panel; all this generates a non-homogeneous cellular structure, with elongated cells or large pin-holes which have a negative effect on the mechanical strength of the foam and the said panel in particular in its cross direction. In fact, the rigid polyurethane foam between the two outer sheet or the shells which are delimiting the sides of the panel must, in certain cases, contribute to the mechanical strength of the entire panel and the required function of heat insulation so as to reduce as far as possible the transmission of the heat.

Therefore in the production of laminated panels comprising a rigid polyurethane foamed core, not only does the need exist to replace the use of the traditional auxiliary blowing agents banned by the Montreal protocol with an inert one, such as for example liquid $CO_2$, but there is also the need to make the whole system more economical, to produce panels with improved mechanical and thermal qualities.

The use of liquid carbon dioxide in the production of polyurethane foams has been varyingly proposed or suggested in numerous prior patents, for example in US-A-3,184,419 and US-A-5,120,770 according to which the reaction mixture is subject to pressure during mixing, in order to keep the blowing agent in the liquid state and cause a pre-expansion or partial frothing of the mixture in the form of a dense creamy foam caused by the release of the blowing agent in gaseous form when it is ejected at the atmospheric pressure. However, in these known systems the partially frothed mixture is ejected in a turbulent manner owing to the sudden vaporisation of the blowing agent. Although the technique of pre-expansion and the use of an inert blowing agent, dissolved in the liquid state in a polyurethane reaction mixture, theoretically allows the production of a foam of low density, In practice the structure of the foam has very weak consistency owing to the presence of large bubbles, pin-holes and irregularly shaped or over-sized cells which make such systems unsuitable for use in the production of laminated panels made with rigid polyurethane foams.

From US-A-3,181,195 Voelker, it is also known a froth applicator for the deposition of a thin layer of plastic foam material on an advancing sheet, particularly for carpet backing. According to this document the device comprises a frothing chamber in which a slight expansion of a gaseous blowing agent occurs immediately after a thin slit, and in which a very thin layer of highly viscous pre-expanded polyurethane material is deposited on the moving substrate to precisely control and the deposition through the same applicator. US-A-3,181,195 therefore related to a different field of technology and does not provide teaching for foaming laminated panels by using a liquid blowing agent according to the invention.

Although pre-expansion with inert gas, in particular $CO_2$, is a potentially well-known technique, hitherto it has not been successfully applied to a process for the continuous production of laminated panels using rigid polyurethane foams.

One object of the present invention is therefore to provide a process for the continuous production of laminated panels comprising rigid polyurethane foams, which advantageously uses an inert blowing agent, in particular liquid $CO_2$ as a non-reactive auxiliary expansion means, so as to make the manufacturing process more economical, at the same time improving the cellular structure of the foam, its thermal features and the mechanical characteristic of the same panels thus obtained.

A further object of the present invention is to provide an apparatus for the manufacture of laminated panels comprising rigid polyurethane foams, as mentioned above, which is totally innovative in this specific field since it enables one to obtain suitable control of the pre-expansion and frothing phase of the polyurethane mixture while the latter is distributed or continuously supplied between external layers of material which are kept in movement along a conveying path.

Yet another object of the invention is to provide a foaming plant, for the continuous production of laminated panels having rigid polyurethane foam, which operates at very low speeds compared to conventional plants, thus allowing the construction of production lines which are shorter in length and able to better satisfy the actual production requirements.

Summary of the invention

In contrast with the conventional prior art in the production of laminated panels, the invention resides in mixing, under pressure, the reactive polyurethane components with at least one low-boiling inert blowing agent, such as liquid $CO_2$ or other auxiliary blowing agents, such as halogenated compounds or fluoroderivatives commercially known by the abbreviations 134A, HCFC, CFC, HFC, or the like, then pre-expanding and frothing the mixture under pressure controlled conditions, depositing the frothing mixture on a moving substrate by means of a lay-down device comprising a pressure equalizing chamber for distributing the mixture crosswise the moving substrate, and by passing the mixture along an elongated pressure-drop slot which extends longitudinally in the flow direction of the frothing mixture for a substantial length higher than the height of said pressure-drop slot, causing the deposition on the substrate of a layer of creamed material in a still frothing condition, then allowing the frothed mixture to rise in the remaining space comprised between the lower substrate and an upper substrate to constrain the foam. In this way, it is possible to obtain gentle and controlled deposition of a frothed mixture with a homogeneous cellular structure which expands and rise under unstressed condition forming while maintaining spherically shaped small cells particularly suitable for improving the mechanical and thermal features of the laminated panels thus obtained.

The present invention is innovative owing to the use of a frothed polyurethane mixture in the continuous production of rigid polyurethane panels, being unique also in that it makes possible to employ in practice environmentally safe blowing agents, and the use a frothing device able to ensure control of the frothing process and an homogeneous distribution of a substantial layer of frothing mixture over the entire width of the panel, of considerable height of about 20÷30% of the final thickness of the panel, avoiding formation of large bubbles while improving the mechanical and thermal features of the panels.

Brief description of the drawings

The invention will be described more fully and in greater detail hereinbelow, with reference to the accompanying drawings in which:

Fig. 1     schematically illustrates a longitudinal section of an apparatus for the continuous production of laminated panels, comprising a rigid polyurethane foamed core, according to the invention;

Fig. 2     is a plan view of the apparatus of figure 1, with the top part removed;

Fig. 3     is an enlarged sectional view along the line 3-3 of figure 2, showing a possible embodiment of a frothing device which to be used with the process according to the invention;

Fig. 4     is a cross-sectional view through a first laminated panel, comprising an intermediate layer of rigid polyurethane foam constrained between flat peripheral layers according to the invention.

Fig. 5     is a cross-sectional view through a second laminated panel of rigid polyurethane foam, provided with external shells defining a metal box-shaped structure.

As shown, the apparatus for the continuous production of laminated panels with an intermediate layer of rigid polyurethane foam, according to the invention, in a possible embodiment thereof substantially comprises a conveyor 10 provided with a lower belt 11 and an upper belt 12, arranged at a suitable distance from one another so as to define a longitudinally extending foaming space 13 having dimensions widthwise and thickness which correspond to those of the panels to be formed.

A first strip of material 14 or other lower continuous substrate which will define an external face or layer of the laminated panels, for example a strip of fabric, metal, plastics or other material suitably pretreated so as to allow good adhesion to the polyurethane foam, in the example shown is unwound from a roll 15 and continuously supplied to move with upper run of lower conveyor belt 11. Correspondingly, a second strip of material 16 or upper continuous substrate suitable for defining the other face of the panels is unwound from a second roll 17 so as to be continuously supplied to move along the bottom run of the upper conveyor belt 12.

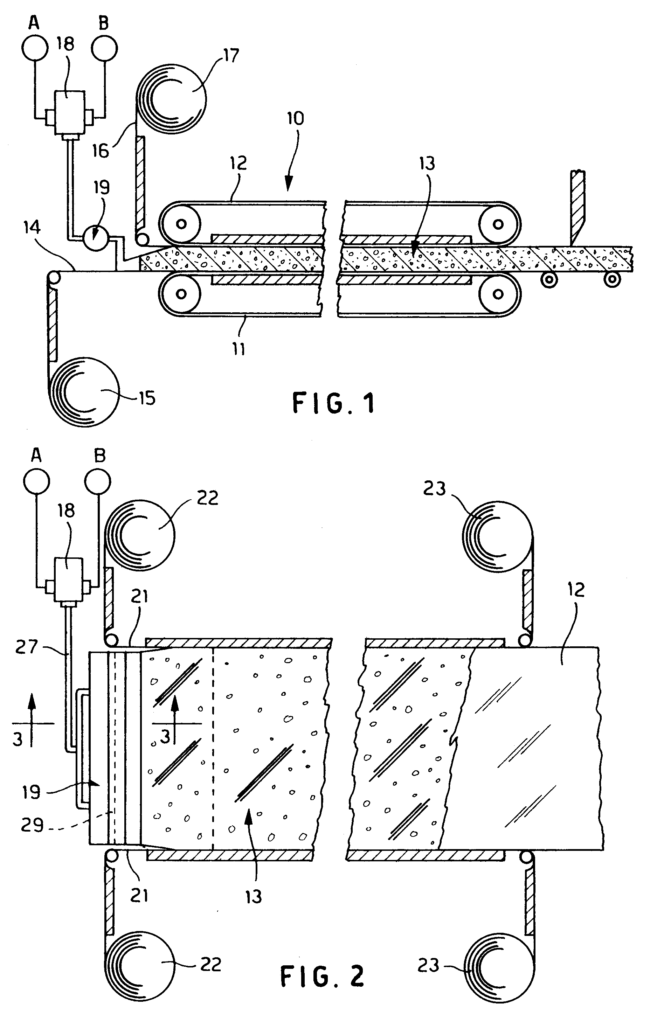

In figure 1, reference 18 denotes moreover a mixing device such as a low pressure or mechanical mixing device known per se, to which the polyurethane chemical components A and B are supplied, said components being suitably pre-mixed with the necessary additives and/or catalysts, water and with at least one liquid non-reactive blowing agent, for example liquid $CO_2$, which is mixed at a pressure of between 5 and 18 bar, preferably between 15 and 18 bar depending from the percentage of blowing agent in the mixture, and then gradually released to obtain a frothing polyurethane mixture by means of a special lay-down device 19; frothing by a controlled release of the $CO_2$ or other blowing agent, in the polyurethane mixture, causes the formation of a dense cream which is deposited onto the lower strip of material 14, at still frothing condition and before the chemical reaction occurs in the foaming space 13 delimited by the two strips of material 14, 16 which are advancing at the same speed along the conveyor 10.

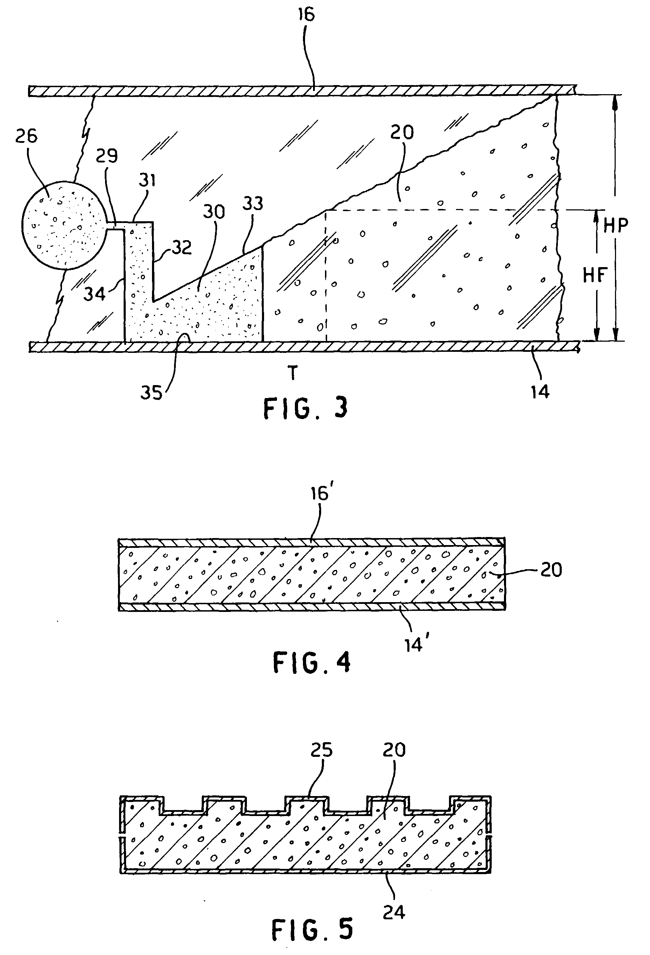

In the case where the panels to be formed simply consist of an internal layer of polyurethane material 20 and external layers of flat material 14' and 16' in sheet form, as shown in figure 4, it may be necessary to contain the polyurethane foam on both sides of the conveyor 10, for example by strip materials 21 which are unwound from respective rolls 22 in alignment with or in the vicinity of the frothing device 19 delivering the frothed polyurethane foam, said strips 21 being rewound onto rolls 23 at the other end of the conveyor 10. It is obvious, however, that depending on the characteristics of the panels to be produced, the plant may be designed or made differently from that shown by way of example in figures 1 and 2 of the accompanying drawings. In fact, should the panels to be formed comprise one or more external shells or trays 24 and 25, as shown in figure 5, which totally enclose on the sides the space for foaming the polyurethane 20, in combination with the plant shown in figure 1, and in place of the strip material 15, 17, it is possible to provide a plant for continuously supplying a succession of shells arranged next to one another.

Figure 3 of the accompanying drawings shows in more detail the general features of the device for frothing the polyurethane mixture in the continuous production of rigid polyurethane panels according to the invention.

As shown in the said figure, the frothing device substantially comprises a tubular pressure-equalization chamber 26 which extends transversely over part or the entire width of the conveyor 10; the pressure equalization chamber 26 is connected on one side by means of duct 27 to the outlet of the mixer 18 and on the opposite side is provided with an elongated slot 29 of very small height, having limiting surfaces so as to form a kind of narrow channel providing a controlled pressure-drop sufficient to keep the blowing agent in the liquid state up stream the slot, inside the chamber 26 and inside the mixer 18. More precisely, the slot 29 is defined by elongated upper and bottom surface areas, parallely arranged each others, which are extending either crosswise in the direction of the tubular chamber 26, and in the longitudinal direction of flow of the mixture to provide sufficient back pressure to keep $CO_2$ or the blowing agent in a liquid state upstream the pressure-drop zone defined by said slot, and to initiate frothing under pressure controlled conditions to avoid turbulent evaporation of the same liquid blowing agent. Differently from the example shown in figure 3, the slot 29 defining a pressure-drop zone could also designed in a different manner; for example it could be formed by restricted openings of suitable shape, comprising a series of circular holes or rectangular apertures crosswise aligned to the pressure equalization chamber 26 and extending in the direction of the flow for a length ten or more the diameter or the cross dimension of the sectional area of said apertures or holes.

For example, according to an embodiment which has been tested and has produced good results, the foaming device consisted of a steel tube of about two metres length, having a diameter of 30 mm and provided with a longitudinal slot 1,82 metres long 0,5 mm height, extending in the flow direction for 20 mm or more.

According to the embodiment shown in figure 3, the pressure equalization slot 29 is delimited by flat side surfaces which are linearly extending in the direction of flow of the mixture and across the moving direction of the substrate, nevertheless said slot may have any other suitable shape for example an arched shape or the like. In general term, the cross sectional area and the geometrical dimensions of the slot are depending on several parameters; more precisely the geometrical features of the slot, to obtain a pressure P in the pressure equalization chamber 26 of the lay-down device 19 suitable to keep the blowing agent at the liquid state, for example a pressure of 5 Bar or higher, and to provide laminar flow conditions through the same slot, at a flow velocity considerably below the critical value or Reinhold number, for example at a velocity of about 5 to 10 m/s, may be calculated by the following formula

$$P = \frac{Q}{L} \cdot \frac{l}{S^3} K$$

in which

P= pressure (Bar) in the chamber 26 of the lay-down device;
Q= output (lt/min);
L= extension (mm) of the slot in crosswise direction of the flow;
l= length (mm) of the slot in the flow direction;
S= height or thickness (mm) of the slot;
K= 0,03÷1,2 depending on viscosity and specific gravity of the chemicals components, obtained by sperimental test.

The longitudinal slot 29 of the pressure equalization chamber 26 leads into the frothing cavity 30 of a diffuser delivering the frothing mixture onto the moving substrate 14 as explained further on; as shown, the frothing cavity 30 causes at least one deviation or angular direction change in flow of the mixture emerging from the slot 29, of the frothing mixture as it moves trough the frothing cavities in the direction of the flow itself, while the still frothing mixture is deposited on the lower strip material 14, as shown.

Preferably, the slot 29 is delimited by flat surfaces which extend in the direction of the flow, leading into a cavity 30 and consisting of an upper wall 31 fixed to the tube of the chamber 26, which extends outwards over a distance of between about 5 and 15 mm. in respect to the bottom wall of the same slot; the wall 31 terminates in a flat wall 32 located opposite and at a distance from the slot 29, in a plane forming an angle of 90° with the wall 31. The wall 32 extends downwards over about 30 mm, terminating in an upperly slanted wall 33 which can also be arranged horizontal and parallel to the lower substrate 14. The cavity 30 is moreover delimited at the rear by a vertical wall 34 which, from the slot 29, extends downwards over about 40 mm, beyond the front wall 32, terminating in a wall 35 which is horizontal or in sliding contact with the moving substrate 14. In this way the flow of the mixture which emerges from the slit 29 form one or more 90° deviations before being deposited on the strip material or moving substrate 14.

The process for the continuous foaming of laminated panels according to the invention will be now explained in more detail.

The process comprises the steps of forming a mixture of reactive chemical components A, B with additives and a non-reactive low boiling blowing agent In the mixer 18, maintaining the mixture under sufficient pressure conditions to have the blowing agent mixed in a liquid state. The mixture from the mixer 18 is fed to the lay-down device 19 and is distributed under pressure controlled conditions by passing the resulting mixture along the elongated pressure equalization chamber 26 and through the elongated pressure-drop slot 29 which is dimensioned to be larger in the flow direction L therethrough than the height S thereof to thereby maintain a back-pressure P on the upstream mixture in the pressure equalizing chamber, so as to maintain the bowling agent in a liquid state, yet permitting frothing of the mixture to be initiated upon the discharge from the same pressure-drop slot 29; thereafter the mixture discharged in the cavity 30 is allowed to expand into a progressively non-reactive frothing material by progressively releasing the liquid blowing agent into the frothing material as the same flows along the frothing cavity 30 and through an outlet aperture.

The still frothing polyurethane material is discharged and deposited continuously on the lower strip of material 14 in a layer of considerable height HF, for example equal to 15% - 50% or more of the thickness HP of the foaming space 13 delimited between the lower strip of material 14 and the upper strip of material 16 of the panel at the entry end of the conveyor 10.

As soon as it has been deposited, the frothing material continues its expansion over a certain length T of the conveyor owing to the gradual release of the auxiliary blowing agent, and than it is permitted to chemicals to react and the foam to freely rise again owing to the generation of the primary expansion gaseous agent such as $CO_2$ caused by the chemical reaction between the chemicals and water, increasing the thickness of the foam until it comes into contact with the upper strip of material 16 which, from that moment, will prevent any further expansion of the foam, which is constrained by exerting a certain pressure on it. During this phase it is possible to control the features of the foamed core of the panel by supplying an excess quantity of mixture, more than that theoretically required to fill the foaming space 13 by the free expansion, for example an extra charge up to 5% compared to the aforementioned theoretical quantity.

On the basis of the principles of the present invention, comparative tests have been carried out, resulting in the production of panels consisting of two flat metal sheets having a thickness of 1,2 mm and an intermediate layer of rigid polyurethane foam with a height of about 10 mm, by using a polyurethane mixture of normal formulation containing a blowing agent.

The polyurethane mixture used was pre-mixed with liquid $CO_2$ as inert pre-expansion agent, in the quantity of five parts of $CO_2$ to one hundred parts of mixture. the mixture of the chemical components for formation of the foam was then delivered at the outlet of the frothing device 19, directly onto lower strip 14, at a certain distance from the entry end of the conveyor 10.

The frothing foam which emerged from the cavity 30 had the consistency of a soft cream, with no large bubbles, and expansion thereof was completed within a short length, filling entirely the foaming space 13 delimited by the two strips of material 14 and 16. With completion of polymerisation, a continuous band comprising a rigid core of polyurethane foam constrained between the two layers of external material was obtained, said band being cut into panels of the required dimensions and having a regular and homogeneous thickness. The structure of the cells was sufficiently small, without any large holes or markedly oval-shaped cells. The structural isotropy of the polyurethane foam obtained as a result of the frothing effect made possible the production of panels possessing improved thermal and structural qualities compared to panels obtained with conventional processes where, in all cases, the formation of holes or large oval-shaped cells oriented in the longitudinal direction of the panel was evident.

The tests carried out have clearly demonstrated the efficiency of the process according to the present invention and the improved qualities of the panels obtained.

The experimental tests carried out have moreover demonstrated the real possibility of using liquid $CO_2$ as an auxiliary blowing agent, so as to guarantee good pre-expansion or frothing of the polyurethane mixture while maintaining relatively low speeds of the conveyor and reduced outputs compared to plants which use conventional techniques.

It is therefore understood that to above description and illustrations with reference to the accompanying drawings have been provided purely by way of explanation of the general principles of the present invention, with regard to the continuous production of laminated panels reinforced with a rigid polyurethane foam core using, in a manner which is novel and can be concretely realized, a process for frothing of the polyurethane mixture, by means of liquid $CO_2$ or some other inert auxiliary blowing agent, such as to improve the entire production process and the characteristics of the panels obtained.

According to possible different embodiments or for different applications, the external layers 14 and 16 could consist of material used for finishing purposes or for simply containing the polyurethane foam during expansion and polymerisation, which could subsequently be maintained or removed, or themselves could form parts having structural function to reinforce the entire panel.

Similarly, in combination with the liquid $CO_2$ as first auxiliary blowing agent, use could be made of a second auxiliary blowing agent, for example Freon 134A having a lambda heat-transmission coefficient different from that of the first blowing agent necessary for frothing, so as to provide the polyurethane foam with a greater heat insulating capacity; in this way it is possible to improve the insulation characteristics of the panel and the processability of the panel itself, in particular owing to the reduced power of migration of the second expansion agent through the foam.

## Claims

1. A process for the continuous production of laminated panels comprising external layers (14, 16; 14'; 16'; 24, 25) and an intermediate layer (20) of rigid polyurethane foam, according to which a mixture of reactive chemical components comprising at least a first low-boiling blowing agent is continuously supplied and expanded in a foaming space (13) delimited by at least one lower continuous substrate (14) and by one upper continuous substrate (16) which are made to advance along a conveyor device (10), characterized by forming a mixture of reactive chemical components (A, B); mixing the reactive chemicals with the low boiling blowing agent under sufficient pressure condition to maintain the blowing agent in a liquid state; distributing the resulting polyurethane mixture by passing said mixture along an elongated pressure equalization chamber (26) and discharging it through an elongated pressure-drop slot (29), said pressure-drop slot (29) having spaced apart facing surfaces axially extending in the direction of the flow to provide sufficient back pressure to keep the blowing agent in a liquid state upstream said slot, and to initiate frothing under pressure controlled conditions to avoid turbulent evaporation of the blowing agent during the frothing; then flowing the expanding mixture along a frothing cavity and thereby depositing a layer of still frothing mixture on the lower substrate (14) to allow the reactive chemical components to complete their reaction and the foamed mixture to gradually rise freely in said foaming space (13) to adhere and to be constrained between said upper and lower substrates (14, 16).

2. A process according to claim 1, characterized by inducing at least one angular flow direction change to the frothing mixture as it moves through the frothing cavity.

3. A process according to claim 1, characterized by subsequently inducing a plurality of angular flow direction changes as the frothing mixture moves through said frothing cavity between said pressure-drop slot (29) and the deposition on said lower substrate.

4. A process according to claim 2 or 3 characterized in that the frothing mixture is passed through a diverging flow path prior to the deposition on the substrate.

5. A process according to claim 1 characterized in that said layer of still frothing mixture deposited on the substrate is comprised between about 15÷50% of said foaming space (13).

6. A process according to claim 1, characterized in that the auxiliary blowing agent comprises carbon dioxide.

7. A process according to preceding claim 1, characterized by mixing the chemical components with a second auxiliary blowing agent having a lamoda heat-transmission coefficient and a power migration in the foam which differ from those of said first auxiliary blowing agent.

8. A process according to preceding claim 1, characterized by supplying said foaming space with an extra charge of mixture up to 5% with respect to the quantity theoretically necessary for filling the same foaming space (13) with the foam in unstrained conditions between said lower and said upper substrates.

9. An apparatus for the continuous production of laminated panels reinforced with rigid polyurethane foam, in which the panel comprises external layers of material delimiting a foaming space and an internal layer of rigid polyurethane foam, said apparatus comprising a mixing device (18) for mixing reactive chemical components (A, B) and at least one auxiliary blowing agent under pressure controlled condition to keep said blowing agent in a liquid state; a conveyor device (10) for continuously advancing a first and a second continuous substrate (14, 16; 14'; 16'; 24, 25) spaced apart from one another so as to define a foaming space (13) characterized by comprising: a frothing device having an elongated pressure equalization chamber (26) provided with an elongated pressure-drop slot (29), said pressure-drop slot (29) having facing surfaces axially extending in the flow direction of the mixture to provide sufficient back pressure to keep the blowing agent in a liquid state upstream the same slot (29), said slot (29) opening into a frothing cavity (30) to allow the disposition of a layer of still frothing material on the moving substrate having a substantial height in respect to said frothing space (13).

10. Apparatus according to the preceding claim 9, characterized in that said frothing cavity (30) is provided with walls means (31, 32, 35) to cause at least one angular deviation of the frothing mixture flowing in said frothing cavity (30).

11. Apparatus according to the preceding claim 9 or 10, characterized in that said frothing cavity comprises a diverging flow path.

12. Apparatus according to the preceding claim 9, characterized in that said elongated pressure-drop slot (29) is delimited by parallely arranged flat surfaces.

13. Apparatus according to the preceding claim 9, characterized in that said elongated pressure-drop slot is defined by a continuous slot or by a succession of holes extending in the flow direction and aligned on one side of said pressure equalization chamber (26) of the frothing device.

14. A laminated panel of rigid polyurethane material comprising upper and lower sheet material (14, 16; 14'; 16'; 24, 25) defining a foaming space (13), and a frothed core (20) of foamed polyurethane material, in which a mixture of reactive chemical components comprising a low boiling agent in liquid state is passed along and elongate pressure equalization chamber (26) and through and elongated pressure-drop slot (29) having facing surfaces axially extending to provide sufficient back pressure to keep the blowing agent in a liquid state upstream said slot (29), than flowing the frothing mixture along a frothing cavity, thereby discharging a layer of frothing material on a moving substrate, having a substantial height in respect to said foaming space (13).

FIG. 1

FIG. 2

FIG. 3

FIG. 4

FIG. 5

European Patent Office

**EUROPEAN SEARCH REPORT**

Application Number

EP 96 10 0904

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 645 226 (KRYPTON INT SA) 29 March 1995 * the whole document * | 1-14 | B29C44/46 |
| X | EP-A-0 683 027 (NORDSON CORP) 22 November 1995 * the whole document * | 1,2,4-14 | |
| X | WO-A-96 00644 (BAYER AG ;HENNECKE GMBH MASCHF (DE); EIBEN ROBERT (DE); EBELING WI) 11 January 1996 * page 7, paragraph 1 - paragraph 4; figures * | 1,4-9, 11,13,14 | |
| A | US-A-3 181 199 (VOELKER WALTER D.) 4 May 1965 * the whole document * | | |
| A | US-A-2 774 106 (BETHE EUGENE J.) 18 December 1956 * figures * | 9,11 | |
| A | EP-A-0 078 340 (DOW CHEMICAL CO) 11 May 1983 * figures * | 9-13 | TECHNICAL FIELDS SEARCHED (Int.Cl.6) B29C |
| A | US-A-4 201 321 (BOKELMANN HORST ET AL) 6 May 1980 * figures * | 9,10,12, 13 | |

-----

The present search report has been drawn up for all claims

| Place of search | Date of completion of the search | Examiner |
|---|---|---|
| THE HAGUE | 7 June 1996 | Pipping, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)